# EUROPEAN PATENT SPECIFICATION

(11) **EP 1 237 302 B1**
(45) Date of publication and mention of the grant of the patent: **27.12.2006**
(21) Application number: 02075637.5
(22) Date of filing: 15.02.2002
(51) Int. Cl.: H04B 7/26, H04J 11/00, H04Q 7/32

(54) **A system for transmitting audio and video signals to UMTS mobile telephony terminals and a mobile terminal for use with the system**
Anordnung zur Übertragung von Audio- und Video-Signale an mobile UMTS-Fernsprechendgeräte und ein mobiles Endgerät zur Verwendung mit der Anordnung
Système pour transmettre des signaux audio et video vers terminaux téléphonigues mobile UMTS et un terminal mobile pour utilisation avec la système

(30) Priority: 21.02.2001 IT TO010154
(43) Date of publication of application: 04.09.2002
(73) Proprietor: RAI RADIOTELEVISIONE ITALIANA (S.p.A.), 00195 Roma (IT)
(72) Inventor: Mignone, Vittoria, 1004 Piobesi Torinesi (Prov. of Torino) (IT); Morello, Alberto, 10126 Torino (IT); Casagranda, Paolo, 10134 Torino (IT)
(74) Representative: Spandonari, Carlo

(56) References cited:
- WO-A-01/01712
- GB-A- 2 313 981
- HORN U ET AL: "INTERACTIVE MOBILE STREAMING SERVICES THE CONVERGENCE OF BROADCAST AND MOBILE COMMUNICATION" EBU REVIEW- TECHNICAL, EUROPEAN BROADCASTING UNION. BRUSSELS, BE, no. 281, 21 September 1999 (1999-09-21), pages 14-19, XP000862720 ISSN: 0251-0936
- LIN XU ET AL: "DRIVE-ing to the internet: dynamic radio for IP services in vehicular environments" 25TH ANNUAL IEEE CONFERENCE ON COMPUTER NETWORKS, 8 November 2000 (2000-11-08), pages 281-289, XP010527447 Tampa, FL, US
- EUROPEAN TELECOMMUNICATIONS STANDARD INSTITUTE (ETSI); EUROPEAN BROADCASTING UNION (EBU): "EN 301 195 V1.1.1, Digital Video roadcasting (DVB); Interaction channel through the Global System for Mobile communications (GSM)" ETSI EN 301 195 V1.1.1, February 1999 (1999-02), pages 1-14, XP002248712
- KROH R ET AL : "High-Quality Interactive and Broadband IP Services for the Vehicle on the Net- The COMCAR Approach-" ITS 2000 WORLD CONGRESS, 6 - 9 November 2000, pages 1-3, XP002248713 Turin, IT
- KELLERER ET AL.: "IP based enhanced Data Casting Services over Radio Broadcast Networks" UNIVERSAL MULTISERVICE NETWORKS, 2000. ECUMN 2000. 1ST EUROPEAN CONFERENCE, 2 October 2000 (2000-10-02), pages 195-203, XP010520270

## Description

The invention relates to a new system for broadcasting multimedia signals to UMTS mobile telephony terminals and to a mobile terminal for use with the system.

Telecommunications systems such as PSTN, GSM and UMTS are conceived as bidirectional cellular systems with "one to one" connections, in which each transceiving terminal is controlled by a cellular network, with execution of a series of procedures suitable to locate it and keep it constantly in contact with the base station to which it is assigned. The data streams arriving at and leaving each terminal are unique and private for that terminal. Each communication begins with a bidirectional dialog with the base station and with a connection procedure in which the terminal is assigned a "channel" for transmission and reception, characterized by time or frequency divisions and, in the case of UMTS, by specific spread-spectrum sequences. Except for control information, there is no mode in which a terminal is in a receive-only state on a stream of services that are common to all users. In order to allow to sustain a large number of simultaneous private conversations among the terminals, the cellular network typically comprises a large number of low-power transmission antennas that cover small areas. The higher the interactive traffic that the network must guarantee, the smaller the size of the cells, which can even reach a density of 100 cells per square kilometer. Accordingly, the cost of a cellular telecommunications network is high and an increase in traffic entails additional network costs.

More particularly, the UMTS system is furthermore designed to allow transmission and reception not only of audio signals typical of conventional telephony but also of pictures and videos and of multimedia signals in general, including in particular, in addition to private signals incoming from another user terminal, information and entertainment services, for example weather information in multimedia form, music video clips, sports-oriented and generalist newscasts. As known to the person skilled in the art, in the UMTS system these functions are implemented by adopting protocols for interchanging data in various formats, such as the Internet Protocol (IP), MPEG, and the like.

In contrast to wireless telecommunications, radio broadcasting consists of unidirectional transmissions of the "one to many" type and is suitable for distributing content of the audio/video/multimedia type. Terrestrial radio and television broadcasting networks use high-power transmitters that cover vast service areas (for example entire administrative regions). Digital broadcasting services use the DVB (Digital Video Broadcasting) and DAB (Digital Audio Broadcasting) systems for the high-capacity unidirectional radio and television stream. The per-user costs of the network are low (on the order of a few tens of euro per family per year), and an increase in receivers (within the coverage area) does not entail increases in network costs. However, digital radio broadcasting networks in the VHF and UHF bands do not offer sufficient capacity to be used to carry Internet and telephony to the user.

Attempts have been made to integrate radio and television digital services with cellular telephony and multimedia services toward mobile terminals, but so far these attempts have merely overlapped the two separate networks (broadcasting and telecommunications), keeping their respective technologies unchanged. The radio broadcasting network provides access to interactive services (for example e-commerce and Internet access) via the electronic program guide (EPG), but interactivity is managed by means of the cellular networks; in this scenario, the system is a DVB/UMTS (or DAB/UMTS) hybrid.

A system of this kind is advocated in Horn U et al, "Interactive Mobile Streaming services the Convergence of Broadcast and Mobile Communication, EBU Review-Technical, European Broadcasting Union, Brussels, BE, no. 281, 21 September 1999 (1999-09-21), pages 14-19, XP000862720 ISSN: 0251-0936.

A system built according to the indications of Horn is described in Kellerer et al.: "IP based enhanced Data Casting Services over Radio Broadcast Networks", Universal Multiservice Networks, 2000. ECUMN 2000. 1st European Conference, 2 October 2000 (2000-10-02), pages 195-203, XP010520270.

Another system affine to the above, though its telecommunication network is based on the GSM standard rather than the UMTS standard, is described in European Telecommunications Standard Institute (ETSI); European Broadcasting Union (EBU): "EN 301 195 V1.1.1, Digital Video Broadcasting (DVB); Interaction channel through the Global System for Mobile Communications (GSM)" ETSI EN 301 195 V1.1.1, February 1999 (1999-02) pages 1-14, XP002248712

WO 01/01712 relates to the centralized management of telecommunications parameters in different wireless telecommunication networks. A terminal can be configured to operate in any new heterogeneous environment (e.g. DAB, WLAN GSM), by receiving from a server the telecommunication parameters of the node providing the required service.

The aim of the invention is now to provide a system for transmitting audio and video signals that allows to provide low-cost radio-broadcast audiovisual services to mobile user terminals capable of operating simultaneously as UMTS mobile telephony terminals, allowing the user to maintain the connection to both the cellular telecommunications network and the radio-broadcast audiovisual services (for example, the terminal must be able to ring due to an incoming call even while receiving a radio or TV program; the user, when receiving a radio/TV advert, must be able to activate a connection to the corresponding Website).

An object of the invention is to provide said transmission system without an appreciable increase in the manufacturing cost and the size and weight of the mobile user terminal with respect to a conventional UMTS terminal.

Another object is to provide said transmission system by using already-available radio broadcasting facilities and infrastructures, without the need for investments in new facilities.

Another object is to make available to the user information and entertainment services at operating costs that are distinctly lower than those linked to the use of the UMTS telephone network.

This aim, these objects and other objects and advantages that will become apparent from the continuation of the description are achieved by the invention with a network structure and network protocols having the features stated in claim 1. The subordinate claims refer to other advantageous features of the invention.

The invention is now described in detail in some preferred embodiments thereof, given by way of nonlimitative example, with reference to the accompanying drawings, wherein:
Figure 1 is a schematic view of a UMTS cellular network and of a transmission system according to the invention, both interacting with UMTS mobile telephony terminals;
Figure 2 is a diagram of the protocol architecture of the system according to the invention;
Figure 3 is an explanatory diagram that relates to the transport of descriptive tables used in the invention; and
Figure 4 is a block diagram of a mobile telephony terminal that can be used in the system according to the invention.

### Description of preferred embodiments

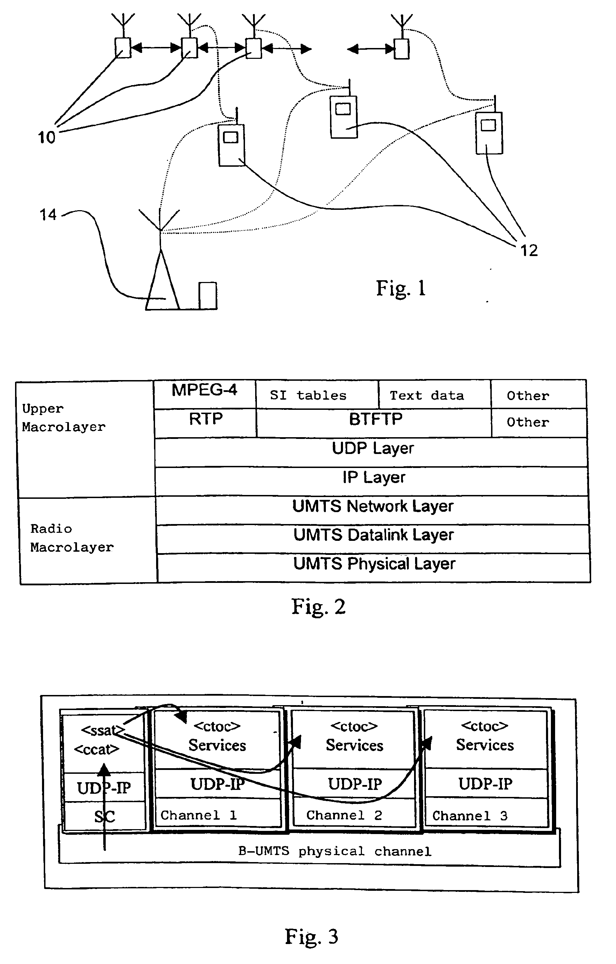

The invention is based on the use of two overlapping networks operating on separate frequency allocations. With reference to Figure 1, a plurality of antennas 10 constitute the cells of a UMTS bidirectional telecommunications network with cellular coverage (hereinafter designated CELLULAR), for interactive services (such as for example telephony and Internet access); said antennas 10 are connected to a plurality of user terminals 12, described hereinafter. The user terminals 12 can further be connected in a unidirectional broadcast network (hereinafter designated BROADCAST), characterized by high-power transmitters having a large coverage area, such as the radio transmitter 14, for broadcasting radio and television multimedia services on a band of carrier frequencies that is different from the carrier of the cellular network.

The invention is based on the concept of using the modes and protocols of the UMTS system both for the interactive services (conventional UMTS system) and for the services for radio broadcasting to mobile user terminals.

While the terminals register themselves and remain hooked onto the UMTS cellular networks that carry the interactive services (telephone, Internet), the UMTS broadcast networks (hereinafter also referenced as B-UMTS), as proposed by the invention, carry unidirectional radio broadcasting signals (audio/video and multimedia) to said UMTS terminals, using multicast streaming protocols of the UDP-IP type. Said networks do not communicate bidirectionally with the individual terminals. Moreover, the broadcast network operates on frequencies that are different from those of the cellular network and uses existing radio broadcasting infrastructures.

In the implementation of the invention, the UMTS system that operates on the broadcast-type network is modified so as not to perform the bidirectional procedures for terminal control: i.e. locating the terminal, sending/requesting calls, controlling power and transmission beam, assigning spread-spectrum sequences for communication. The transmission of a broadcast service is in fact not dependent on opening a connection with a specific terminal, but proceeds continuously, independently of the presence and number of receiving terminals (as occurs in the DVB or DAB broadcasting systems). The broadcast-type base station therefore uses IP protocols of the unidirectional type (UDP-IP type) and routes all the broadcast-type services to the radio frequency carrier, assigning to each service a specific spread-spectrum sequence, i.e., a specific UMTS "channel".

The system according to the invention is based on communications protocols and procedures according to the 3GPP recommendation of UMTS. However, the standard for audio/video streaming services according to the 3GPP recommendation is based on the principle of demand ("on demand") by the user and on the allocation, with a bidirectional procedure, of a dedicated channel to each individual user. In order to avoid bidirectional procedures between the base station and the user terminal, one or more virtual terminals which, at the beginning of the transmission, by requesting the streaming services, start the procedures for selecting the transmission parameters for the various streaming channels. These parameters are then stored in the SI tables and sent to the users, according to the procedures established by the invention. Whenever a variation occurs in the offered services, the invention starts a new demand procedure on the part of the virtual terminals. This method allows to avoid modifications to the 3GPP standard of UMTS; if the standard introduces formats and procedures for auto/video streaming in broadcast mode, they might be used in the system according to the invention.

The protocol architecture of the system according to the invention can be divided into two macrolayers, as shown in Figure 2: a radio macrolayer, based on the 3GPP standard, which comprises the physical layer (PL, Physical Layer, which refers to series 25.2 of the 3GPP standard), layer 2 (Data Link Layer, which refers to series 25.3 of the 3GPP standard), and layer 3 (Network Layer, which refers to series 25.4 of the 3GPP standard); and an upper macrolayer comprising IP and the upper-level protocols (UDP, RTP, et cetera).

Again with reference to Figure 2, the IP upper-layer protocols defined in this specification are based on UDP. This does not rule out the use of other protocols for the upper layer.

The Application Layer holds the content. Content, in general, can be constituted by audio and video or data. Audio and video is preferably encoded according to MPEG-4 (ISO/IEC 14496 standard and subsequent updates); encoding complexity can be limited to profiles (not described here) that establish the complexity of the decoding operations. Content can be encoded with other standards that are currently commercially available (Microsoft MPEG-4 format, RealVideo and RealAudio, et cetera) or will be developed in the future, no limitation to the possibilities of encoding the audio and video streams being intended here. The data can be files, images, Web pages. Encoding of data and of multimedia objects is not limited here to a particular standard.

Content is organized in suitable structures, which can be easily encapsulated in the subsequent levels. It is possible to use RTP (standard by H. Schulzrinne, S. Casner, R. Frederick, V. Jacobson: "*RTP: A Transport Protocol for Real-Time Applications*", RFC1889, January 1996, but see also, for MPEG-4, Y. Kikuchi, T. Nomura, S. Fukunaga, Y. Matsui, H. Kimata: *"RTP Payload Format for MPEG-4 Audio*/*Visual Streams*", RFC3016, Proposed Standard, November 2000, and for other MPEG formats see D. Hoffman, G. Fernando, V. Goyal, M. Civanlar, *"RTP Payload Format for MPEG1*/*MPEG2 Video",* RFC2250, January 1998) in the case of MPEG-4 streams; on the other hand, session management protocols, such as RTSP (H. Schulzrinne, A. Rao, R. Lanphier: "*Real Time Streaming Protocol (RTSP)*", RFC2326, Proposed Standard, April 1998) and SDP (M. Handley, V. Jacobson: "*SDP: Session Description Protocol*", RFC2327, Proposed Standard, April 1998) are instead not used, since they require a return channel. The use of RTCP packets (see the RTP standard) or of protocols for quality of service control on a channel according to the invention is also not provided, but it is not ruled out in case of hybrid operation with a return channel (for example using the UMTS standard). In the case of data, Web pages, images or other multimedia objects, it is necessary to use protocols based on UDP, which do not use return channels. An example of data transfer protocol suitable for the above purpose is the one known as BTFTP ("*Broadcast Trivial File Transfer Protocol",* Internet Draft) and described in Italian patent application no. TO2000A000439, filed on 12 May 2000 by the Applicant.

The UDP Layer, according to the standard (see J. Postel: *"User Datagram Protocol",* RFC768, August 1980), is the intermediate layer, enabling the use of protocols that do not have a return channel and are therefore suitable for the broadcast nature of the system. This layer contains transport functions and, partially owing to the unidirectional nature of the channel, session functions. With UDP it is possible to perform multiplexing/demultiplexing of the content of an individual IP address by virtue of the port mechanism.

The IP Layer defines, according to the standard (see J. Postel: "*Internet Protocol*", RFC791, September 1981), the transport level and the syntax for the IP datagrams, which can be based on IPv4 but also, preferably, on IPv6. The address of the individual datagram is defined in the IP Layer. The UMTS Broadcast mode uses IP Multicast addresses to distribute content to all the terminals or to groups of terminals. IP Multicast addressing, in addition to rendering UMTS Broadcast perfectly interoperable with the Internet world, is particularly suitable for the broadcast nature of the system. IP Unicast addressing can be used for particular cases in which it is necessary to configure an individual UMTS terminal. The IP datagrams will have an MTU (Maximum Transfer Unit) suitable for encapsulation in the UMTS layer.

As regards addressing, according to the invention it is defined by the IP Layer. Reference is made hereinafter to the IPv4 standard. The use of Multicast addresses for sending content (224.0.0.0 to 239.255.255.255; see also the document by J. Reynolds and J. Postel: "*Assigned Numbers",* RFC1700, October 1994) renders content sending flexible and standard.

To encode the audio/video streams, the MPEG-4 encoding standard is used, in the version standardized by the MPEG group (ISO/IEC standard 14496, October 1998, and subsequent updates). The possibility of using standards other than RTP for the transport of MPEG-4 (Microsoft type) is not ruled out; this depends on the decoding capabilities of the UMTS terminal.

As regards content description, one choice for providing the system consists in transporting all this information in the Application Layer of SC, in appropriate tables known as Service Information, or SI, although it is also possible to transport the information at the RADIO level. The SIs are in the form of ASCII text files whose content complies with the XML standard (see W3C Recommendation: *"Extensible Markup Language (XML)*", February 1998, 2^{nd} Edition, October 2000). The Service Information of the SC channel must be transmitted on a known IP address and port; one embodiment provides for IP address 230.1.2.3 and port 53000.

At the radio access level, according to the invention, the Broadcast-UMTS broadcasting station transmits:
-- generic information for the actual operation of the user terminal, as specified in the UMTS standard, including system information common to the entire cell (for example an indicator of the scrambling sequence on the BCH transport channel), terminal synchronization information, pilot signals for estimating the transmission channel, which respectively correspond to physical channels P-CCPCH (Primary Common Control Physical Channel), PSCH (Physical Synchronization Channel) and CPICH (Common Pilot Channel) of the 3GPP standard.
-- information on the broadcast services present on the radio-frequency channel. This information (known as Service Information) is meant to guide the user in choosing the services. In the preferred embodiment, this component takes the form of a table which contains the list of services present in the radio channel and the information required by the physical layer of the receiver in order to tune to said services (for example spreading sequence, scrambling sequence, encoding, et cetera); it is preferably but not exclusively carried by the FACH (Forward Access Channel) transport channel, which corresponds to the S-CCPCH (Secondary Common Control Physical Channel) physical channel, whose structure is given in ETSI recommendation TS 125 211 v.3.4.0., "*Universal Mobile Telecommunications System (UMTS): Physical channels and mapping of transport channels onto physical channels (FDD)*". As an alternative, the SI table can be transported by the PCH (Paging Channel) transport channel, which always corresponds to the S-CCPCH physical channel, furthermore associated with the PICH (Paging Indicator Channel) physical channel, normally used to notify the mobile terminal of the presence of information on the Paging Channel and used here to notify the mobile terminal of the presence of variations of the SI table contained in the Paging Channel. As additional alternatives, the SIs could be transported on the BCH channel or on a dedicated channel DCH. The information required by the receiver to connect to the Service Information transport channel (including the associated spreading sequence) are set beforehand or transmitted in the BCH channel and are known to the receiver. The transmission of this information channel occurs continuously and cyclically, so that each terminal, at power-on, can connect immediately to this channel and receive information regarding the services provided;
-- the various multimedia audio/video streaming services, which travel on dedicated transport channels DCH, optionally divided over multiple physical channels, by means of the CCTrCH (Code Composite Transport Channel). Assignment of the physical channels is performed at the transmitter depending on the services to be broadcast and the characteristics of the transmission channel, and is stored in the SI table.

Content description is not necessary but is preferred according to the invention, since it is the most straightforward means by which the terminal can gather information on the broadcasts in real time.

The preferred embodiment of the invention is constituted by a signal that is compatible with the UMTS standard, is emitted by the transmitting station, and is formed by multiple information streams known as channels and characterized, at the RADIO level, by appropriate spread-spectrum sequences. One of the channels (the service channel, SC hereinafter for the sake of brevity), is dedicated, in the preferred embodiment, to the description of other channels and of the content associated with each one of said other channels. The SC channel must have characteristics that are known to the terminal (spread spectrum sequence), which connects to it during initialization. After connecting to the SC channel, the terminal extracts from it information on the other channels contained in the physical transmission channel (spreading sequences, bitrates and description of the content of the other subchannels from the SC channel). The receiver, after extracting the information contained in the SC channel, can offer a menu to the user and tune to the appropriate channel if selected by the user. As an alternative, the SI tables can be stored on an Internet site, downloaded by the user over the cellular UMTS network and stored in the terminal. Every time the administrator of the SI table varies its content, this must be reported to users (for example via SMS) so that they update the copy stored in the terminal.

The user terminal, by connecting to the B-UMTS network, receives system information and pilot signals for synchronization and equalization of the transmission channel, and the SI table containing information on the available services. The table is stored in the receiver and is re-updated periodically or when signaled by the broadcasting station (for example on the PICH channel). When the user selects the intended program, the receiver searches in the table for the information regarding the physical channel or channels DCH to process and pass to the subsequent levels.

The Service Information will use at least the tables described hereinafter:

Table for associating spreading sequences and channels: with the following format (here, and hereinafter, the XML preamble is not inserted in order to provide the information in more concise form):
<ssat>
<channel c=c0 ss=s0></channel>
<channel c=c1 ss=s1></channel>
<channel c=c2 ss=s2></channel>
...
</ssat>

The <ssat> tag indicates the beginning of the table. The <channel> tag indicates the beginning of the description of the association between a spreading sequence and a channel. Channel number c0 is, for example, associated with spreading sequence s0. From this table, the receiver obtains the spreading sequences for each channel. The number c0 allows to reference the channel in a symbolic manner.

Table for associating channels and channel content:
<ccat>
<content c=ch0>
   <description text="Description string"></description>
   <toc ad=a0 port=p0 display=d0></toc>
   <service ad=sa0 port=sp0 type="Service type"></service>
   <bitrate b=b0></bitrate>
</content>
...
</ccat>

The <ccat> tag indicates the beginning of the table. The <content> tag indicates the beginning of the description of the association between a channel ch0 and the characteristics of that channel, as specified in the subsequent tags. The <description> tag associates with the channel a label, which can be displayed on the menu of the receiver and indicates the content of the channel in a manner that can be understood by the user (string of the text key). The <toc> tag specifies that at the multicast address a0, on port p0, a table providing a detailed description of the channel being considered is broadcast in a loop. The <toc> tag is therefore useful for channels that contain more than one audio/video or data stream. If the display key has a nonzero value, the table of contents <toc> is the first object to be displayed (therefore the user can navigate directly in a local menu of the channel). If display is equal to 0 or is not present, the service described in <service> is the first object that is presented (therefore the user sees immediately, for example, the audio/video stream of the channel). The <service> tag specifies the characteristics of the main service contained in the channel; sa0 is the multicast address, sp0 is the port; the type key specifies the type of service, as an Internet Media Type (see J. Reynolds, J. Postel: "*Assigned Numbers",* RFC1700, October 1994 and subsequent updates), an information that is required at the application level for content interpretation. The <bitrate> tag defines as b0 the bitrate of the channel. It should be noted that each one of the described tags is optional. The <content> tag must be repeated for each channel.

Each channel dedicated to content can furthermore contain, as specified by the <toc> tag of the preceding table, a Table of Contents that describes in detail any additional services that are present.

All channels that are not service channels (such as the SC) are meant to transport the audio/video and data content. Each channel can contain various audio/video and data streams, insofar as allowed by the band assigned to the channel. The specific Table of Contents of the channel has the following syntax:
<ctoc>
<subservice s=s0>
   <description text="Description string"></description>
   <service ad=sa0 port=sp0 type="Service type"></service>
   <bitrate b=b0></bitrate>
</subservice>
...
</ctoc>
where the meaning of the tags is similar to their meaning in the <ccat> table.

Transport of all the tables is performed on the Application Layer. The tables are repeated in the SC channel periodically. The tables of content <ctoc> of each channel, if present, are repeated periodically. The preferred embodiment uses BTFTP (Broadcast Trivial File Transfer Protocol) for transport of the tables over UDP, but other transport protocols are not ruled out.

Figure 3 summarizes all of the above.

The use of XML tables constitutes the preferred embodiment in the invention. An alternative embodiment consists in using tables encoded according to the MPEG and DVB-SI (ISO13818-1, EN300-468) standard, replacing the PID (packet identifier) information with channel information (number of channels). It should be noted that this replacement greatly restricts the possibility to describe the content at the Application level, since it is not possible to reference the various services optionally present on each channel at the present time. In this regard, subsequent DVB standardizations (for example the possibility to describe in detail in the DVB-SI services at the IP level) will be incorporated in subsequent implementations of the system being considered.

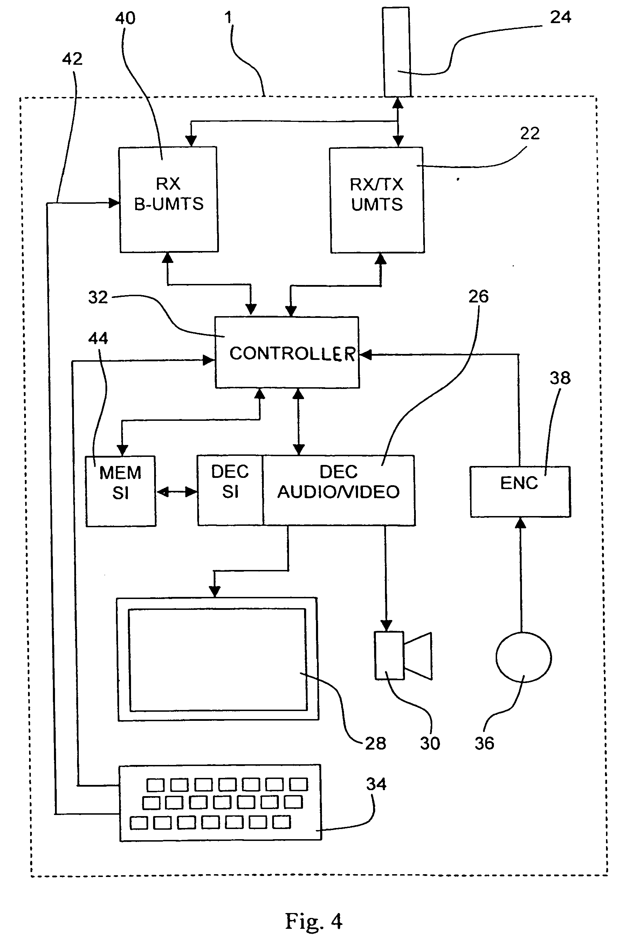

Figure 4 is a block diagram of an improved UMTS user mobile terminal according to the invention, suitable to interact with the two CELLULAR and BROADCAST networks. The terminal 20 comprises first of all a UMTS transceiver 22, which is connected to an antenna 24 for receiving a radio-frequency UMTS signal from the CELLULAR network, demodulate it and decode its physical layer (or radio layer) and for performing the reverse operations of encoding and modulation for transmission via the same antenna 24, as known to the person skilled in the art.

The terminal 20 furthermore comprises video/audio decoding circuits 26, which decode the IP and higher levels (UDP or the like, as well as audio and video formats such as MPEG, RealAudio, et cetera), as known in the art, driving a graphical display 28 and a speaker 30. Data transfer from the UMTS transceiver 22 to the decoding circuits 26 occurs by means of a controller 32, which has several management tasks that are known in the art, such as detecting call notifications arriving from the network and generating appropriate indications for the user (ring on the speaker 30 and/or information on the display 28), receiving commands from a keypad 34 of the terminal and generating the appropriate actions (call to the network, internal services of the terminal, et cetera) and of course transferring the received audio and video data to the video/audio decoding circuits 26.

The terminal 20 furthermore comprises, again in a per se known manner, a microphone 36, which drives an encoder 38, which sends the encoded data to the controller 32, which also has the task of transferring them to the transceiver 22 for transmission toward the network.

According to the invention, the terminal 20, in addition to the above functional components, which are substantially known, furthermore comprises a receiver 40, connected to the same antenna 24, for receiving signals from the BROADCAST network, demodulating them and decoding their physical layer (or radio layer), like the transceiver 22. The receiver 40 also is connected to the controller 32 in order to transfer thereto the received signals, so that the controller 32 in turn transfers them to the decoding circuits 26, in order to finally display them on the display 28 or play them on the speaker 30. However, the receiver 40 is normally inactive and can be activated by an enable command that it receives over a line 42 from the keypad 34, for example by pressing a button or by means of another procedure.

Therefore, according to the invention, the controller 32, in addition to the above mentioned conventional tasks, also has the task of receiving and routing to the decoding circuits 26 the signals that arrive from the receiver 40, and more specifically one of the channels comprised within said signals, according to the selection that arrives from the keypad. For example, the user might scan the services or programs available at that time, by pressing a forward key, or, if he knows the program range, by directly selecting a specific program by means of a combination of keys. In any case, the controller 32 continues to communicate with the UMTS transceiver 32 in order to monitor any incoming calls and report them to the user. The keypad command with which the user accepts the call simultaneously disables the receiver 40.

If the program descriptive tables are implemented, the user terminal furthermore comprises an SI table memory 44, to which the controller routes the data contained in the channel dedicated to said tables. The SI memory 44 communicates with the audio/video decoding circuits 26, in order to display them in menu form on the display 28. The user, by means of the keypad 34, transmits his selection to the controller 32.

The circuit modifications to be applied to a conventional controller for UMTS mobile telephony terminals in order to obtain the above described functions are obvious to the person skilled in the art and therefore are not described here for the sake of simplicity.

In a typical scenario, the receiver should perform the following operations:
-- initialization and connection to the SC channel, which contains the information on the other channels. This is possible because the characteristics of the SC channel are known;
-- the terminal begins to receive the tables transmitted cyclically at the default address of the SC channel (IP 224.1.2.3, port 53000);
-- once it has received the <ssat> table of association between sub-channels and spreading sequences, the receiver has all the information required to receive the other sub-channels;
-- once it has received the <ccat> table, the receiver can show on the user's display a menu with the available content. The contents of the <description> tag of each <content> section is displayed;
-- the user selects an item of the menu;
-- the receiver, by knowing the channel number associated with that menu item, selects the spreading sequence that corresponds to the channel and starts to receive data;
-- if the <toc> tag of the channel contains the display key and said key is not zero, the receiver shows on the display a submenu related to the channel;
-- if the <toc> tag of the channel does not contain the display key or if said key is null, the receiver shows on the display the main service (for example an audio/video stream).

With respect to a hybrid DVB/UMTS system, the system described in the invention has important advantages, including the following: (1) the receiver uses homogeneous technologies and therefore requires lower development costs; (2) the DVB-type receiver has to demodulate an entire 5-15 Mbit/s stream, while the UMTS receiver can demodulate only the service used by the user (e.g. 64-200 kbit/s) and therefore has a far lower battery consumption.

In the above described embodiments of the invention it is of course possible to make modifications and variations in their nonessential aspects. The forms and methods of encapsulating the radio broadcast data, without losing compatibility with the UMTS system, might vary, especially at the uppermost layers, depending on the protocols that may be available also in the future. For example, the SI service tables might be omitted, especially if the multimedia services offered are limited in number, either allowing the user to browse in succession through the services offered at that time to choose his favorite, or determining once and for all the types of service available and their codes. The description of the user terminal should also be understood to be a preferred functional scheme, it being understood that the same functions can be obtained with other equivalent means.

## Claims

1. A system for transmitting multimedia programs to a plurality of mobile telephony terminals (12), each comprising a UMTS transceiver (22) driving decoder means (26) associated with a graphical display (28) and a speaker (30), and connected to an antenna (24) for receiving a first frequency band belonging to a UMTS cell telephone network having a plurality of low-power cells (10); each mobile telephony terminal further comprising a receiver (40) connected to said antenna (24) for receiving a second frequency band from at least one high-power radio transmitter (14) capable of broadcasting multiple multimedia programs in said second frequency band, over an area that comprises a plurality of cells of the UMTS network, said receiver (40) being selectably connectable to said decoder means (26);
**characterized in that** said high-power radio transmitter (14) is arranged for broadcasting said plurality of multimedia programs in the form of signals compatible with the physical layer of the UMTS protocol and in respective UMTS channels identified by respective codes according to the UMTS protocol; and
**in that** said receiver (40) is arranged for decoding the signals transmitted by the high-power radio transmitter, extracting a signal from a selected one of said channels, and applying the decoded signal from the selected channel to said decoder means (26) associated with the display and the speaker.

2. The system for transmitting multimedia programs according to claim 1, **characterized in that** the signal broadcast by said radio transmitter (14) cyclically transports descriptive tables describing the multimedia services or programs contained in said channels.

3. The system for transmitting multimedia programs according to claim 2, **characterized in that** said descriptive tables are transported in predetermined UMTS channel.

4. The system for transmitting multimedia programs according to claim 3, **characterized in that** each one of said mobile telephony terminals (12) furthermore comprises a memory area (44) for storing said received descriptive tables, means (26) for displaying said descriptive tables on the display (28), and means (34) for receiving from the user commands for selecting one or more of said multimedia services or programs on the display and for enabling the reception of the chosen UMTS channel.

5. The system for transmitting multimedia programs according to one of claims 1 to 4, **characterized in that** said receiver (40) in each one of said mobile telephony terminals (12) is normally deactivated and can be activated by the user by means of control means (36, 38).

6. The system for transmitting multimedia programs according to claim 5, **characterized in that** each one of said mobile telephony terminals (12) is provided with visual and/or audio signaling means (28, 30) controlled by said UMTS transceiver (22), in order to notify the user of the arrival of a call from the UMTS cellular network while said receiver (40) is in operation.

7. The system for transmitting multimedia programs according to one of claims 1 to 6, **characterized in that** the protocol architecture of the signals transmitted by said radio transmitter comprises a radio macrolayer, which is compatible with the UMTS protocol, and an upper macrolayer.

8. The system for transmitting multimedia programs according to claim 7, **characterized in that** said upper macrolayer comprises an IP (Internet Protocol) layer, a UDP (User Datagram Protocol) layer, and an application layer (Application Layer).

9. The system for transmitting multimedia programs according to claim 8, **characterized in that** said application layer uses an RTP (Real Time Protocol) protocol to transport the signals in MPEG-4 format.

10. The system for transmitting multimedia programs according to claim 8, **characterized in that** said application layer uses a BTFTP (Broadcast Trivial File Transfer Protocol) protocol to transport text data.

11. The system for transmitting multimedia programs according to claim 9, **characterized in that** said text data are descriptive tables describing the multimedia services or programs.

12. A mobile terminal for use in the system according to one of claims 1 to 11, comprising a graphical display (28) driven by decoding circuits (26) for decoding audiovisual signals a UMTS transceiver (22) arranged for receiving UMTS signals from an antenna (24), and a controller (32) which connects the UMTS transceiver (22) to said decoding circuits (26), **characterized in that** the terminal further comprises a receiver (40) of signals that are compatible with the physical layer of the UMTS protocol, which can be activated by the user and tuned to receive and demodulate the signal emitted by said radio transmitter (14) and transfer it to the controller (32), and **in that** the controller is arranged for transferring to said decoding circuits (26) at least one of the channels of said received signal.

13. The mobile terminal according to claim 12, **characterized in that** the controller (32) is preset to receive a channel selection from a keypad (34) and to select from the signal the chosen channel in order to route it to the decoding circuits (26).

14. The mobile terminal according to claim 12 or 13, **characterized in that** it further comprises a memory (44) for tables describing the multimedia services or programs which is connected to the controller (32) and to the decoding circuits (26) in order to receive the text data contained in a preset channel and show a menu of programs on the display (28) of the terminal.

## Patentansprüche

1. System zum Senden von Multimediaprogrammen an eine Mehrzahl von mobilen Telefonendeinrichtungen (12), die jeweils einen UMTS-Transceiver (22) umfassen, der ein Decodermittel (26) ansteuert, dem eine graphische Anzeige (28) und ein Lautsprecher (30) zugeordnet sind und der mit einer Antenne (24) zum Empfangen eines ersten Frequenzbandes verbunden ist, das zu einem zellularen UMTS-Telefonnetz mit einer Mehrzahl von Zellen (10) mit niedriger Leistung gehört; wobei jede mobile Telefonendeinrichtung ferner einen mit der Antenne (24) verbundenen Empfänger (40) umfasst, um ein zweites Frequenzband von zumindest einem Funksender (14) mit hoher Leistung zu empfangen, der in der Lage ist, mehrere Multimediaprogramme auf dem zweiten Frequenzband über ein Gebiet rundzusenden, das eine Mehrzahl von Zellen des UMTS-Netzes umfasst, wobei der Empfänger (40) selektiv mit den Decodermitteln (26) verbindbar Ist;
**dadurch gekennzeichnet, dass** der Funksender (14) mit hoher Leistung dazu eingerichtet ist, die Mehrzahl von Multimediaprogrammen in Form von Signalen, die mit der physischen Schicht des UMTS-Protokolls kompatibel sind, und in entsprechenden UMTS-Kanälen rundzusenden, die durch entsprechende Codes gemäß dem UMTS-Protokoll identifiziert sind; und
dadurch, dass der Empfänger (40) zum Decodieren der durch den Funksender mit hoher Leistung gesendeten Signale, zum Extrahieren eines Signals aus einem ausgewählten der Kanäle und zum Zuführen des decodierten Signals von dem ausgewählten Kanal an die Decodermittel (26) eingerichtet ist, die der Anzeige und dem Lautsprecher zugeordnet sind.

2. System zum Senden von Multimediaprogrammen nach Anspruch 1, **dadurch gekennzeichnet, dass** die Signalrundsendung durch den Funksender (14) beschreibende Tabellen zyklisch transportiert, welche die Multimediadienste oder die in den Kanälen enthaltenen Programme beschreiben.

3. System zum Senden von Multimediaprogrammen nach Anspruch 2, **dadurch gekennzeichnet, dass** die beschreibenden Tabellen in einem vorbestimmten UMTS-Kanal transportiert werden.

4. System zum Senden von Multimediaprogrammen nach Anspruch 3, **dadurch gekennzeichnet, dass** jede der mobilen Telefonendeinrichtungen (12) weiterhin einen Speicherbereich (44) zum Speichern der empfangenen beschreibenden Tabellen, Mittel (26) zum Anzeigen der beschreibenden Tabellen auf der Anzeige (28) und Mittel (34) zum Empfangen von Befehlen von dem Benutzer zum Auswählen eines oder mehrerer der Multiniediadienste oder -programme auf der Anzeige und zum Ermöglichen des Empfangs des gewählten UMTS-Kanals umfasst.

5. System zum Senden von Multimediaprogrammen nach einem der Ansprüche 1 bis 4, **dadurch gekennzeichnet, dass** der Empfänger (40) In jeder der mobilen Telefonendeinrichtungen (12) normalerweise deaktiviert ist und durch den Benutzer mittels Steuermitteln (36, 38) aktiviert werden kann.

6. System zum Senden von Multimediaprogrammen nach Anspruch 5, **dadurch gekennzeichnet, dass** jede der mobilen Telefonendeinrichtungen (12) mit visuellen und/oder Audio-Signalgebungsmitteln (28, 30) versehen ist, die durch den UMTS-Transceiver (22) gesteuert werden, um den Benutzer über die Ankunft eines Anrufs von dem zellularen UMTS-Netz zu benachrichtigen, während der Empfänger (40) in Betrieb ist.

7. System zum Senden von Multimediaprogrammen nach einem der Ansprüche 1 bis 6, **dadurch gekennzeichnet, dass** die Protokollarchitektur der durch den Funksender gesendeten Signale eine Funk-Makroschicht, die mit dem UMTS-Protokoll kompatibel ist, und eine obere Makroschicht umfasst.

8. System zum Senden von Multimediaprogrommen nach Anspruch 7, **dadurch gekennzeichnet, dass** die obere Makroschicht eine erste IP (Internetprotokoll)-Schicht, eine UDP (User Datagram Protocol/Benutzerdatagrammprotokoll)-Schicht und eine Anwendungsschicht (Anwendungsschicht) umfasst.

9. System zum Senden von Multimediaprogrammen nach Anspruch 8, **dadurch gekennzeichnet, dass** die Anwendungsschicht ein RTP (Real Time Protocol/Echtzeitprotokoll)-Protokoll zum Transportieren der Signale im MPEG-4-Format verwendet.

10. System zum Senden von Multimediaprogrammen nach Anspruch 8, **dadurch gekennzeichnet, dass** die Anwendungsschicht ein BTFTP (Broadcast Trivial File Transfer Protocol/triviales Rundsendungs-Dateiübertragungsprotokoll)-Protokoll zum Transportieren von Textdaten verwendet.

11. System zum Senden von Multimediaprogrammen nach Anspruch 9, **dadurch gekennzeichnet, dass** die Textdaten beschreibende Tabellen sind, welche die Multimediadienste oder -programme beschreiben.

12. Mobile Endeinrichtung zur Verwendung In dem System nach einem der Ansprüche 1 bis 11, die eine grafische Anzeige (28), die durch Decodierschaltungen (26) zum Decodieren audiovisueller Signale angesteuert wird, einen zum Empfangen von UMTS-Signalen von einer Antenne (24) eingerichteten UMTS-Transceiver (22) und eine Steuereinheit (32) umfasst, die den UMTS-Transceiver (22) mit den Decodierschaftungen (26) verbindet, **dadurch gekennzeichnet, dass** die Endeinrichtung ferner einen Empfänger (40) für Signale, die mit der physischen Schicht des UMTS-Protokolls kompatibel sind, umfasst, der durch den Benutzer aktiviert werden und zum Empfangen und Demodulieren des durch den Funksender (14) ausgesandten Signals eingestellt werden und es an die Steuereinheit (32) übermitteln kann, und dadurch, dass die Steuereinheit zum Übermitteln von zumindest einem der Kanäle des empfangenen Signals an die Decodierschaltungen (26) eingerichtet ist.

13. Mobile Endeinrichtung nach Anspruch 12, **dadurch gekennzeichnet, dass** die Steuereinheit (32) voreingestellt ist, eine Kanalauswahl von einer Tastatur (34) zu Empfangen und von dem Signal den gewählten Kanal auszuwählen, um ihn an die Decodierschaltungen (26) zu weiterzuleiten.

14. Mobile Endeinrichtung nach Anspruch 12 oder 13, **dadurch gekennzeichnet, dass** sie ferner einen Speicher (44) für die Tabellen umfasst, welche die Multimediadienste oder -programme beschreiben, der mit der Steuereinheit (32) und den Decodlerschaltungen (26) verbunden Ist, um die In einem vorausgewählten Kanal enthaltenen Textdaten zu empfangen und ein Programmmenü auf der Anzeige (28) der Endeinrichtung zu zeigen.

## Revendications

1. Système pour transmettre des programmes multimédia vers une pluralité de terminaux téléphoniques mobiles (12), chacun comprenant un émetteur-récepteur UMTS (22) pilotant des moyens de décodeur (26) associés à un affichage graphique (28) et un haut-parleur (30), et connectés à une antenne (24) pour recevoir une première bande de fréquence appartenant à un réseau téléphonique cellulaire UMTS ayant une pluralité de cellules basse puissance (10) ; chaque terminal téléphonique mobile comprenant en outre un récepteur (40) relié à ladite antenne (24) pour recevoir une seconde bande de fréquence depuis au moins un émetteur radio haute puissance (14) capable de diffuser des multiples programmes multimédia dans ladite seconde bande de fréquence, sur une zone qui comprend une pluralité de cellules du réseau UMTS, ledit récepteur (40) pouvant être connecté sélectivement aux dits moyens de décodeur (26);
**caractérisé en ce que** ledit émetteur radio haute puissance (14) est prévu pour diffuser ladite pluralité de programmes multimédia sous la forme de signaux compatibles avec la couche physique du protocole UMTS et dans des canaux UMTS respectifs identifiés par des codes respectifs selon le protocole UMTS ; et
ledit récepteur (40) est prévu pour décoder les signaux émis par l'émetteur radio haute puissance, pour extraire un signal provenant d'un canal sélectionna desdits canaux, et pour appliquer le signal décodé provenant du canal sélectionné aux dits moyens de décodeur (26) associés à l'affichage et au haut-parleur.

2. Système pour transmettre des programmes multimédia selon la revendication 1, **caractérisé en ce que** l'émission de signaux par ledit émetteur radio (14) transporte de façon cyclique des tables descriptives décrivant les services ou les programmes multimédia contenus dans lesdits canaux.

3. Système pour transmettre des programmes multimédia selon la revendication 2, **caractérisé en ce que** lesdites tables descriptives sont transportées dans un canal UMTS prédéterminé.

4. Système pour transmettre des programmes multimédia selon la revendication 3, **caractérisé en ce que** chacun desdits terminaux téléphoniques mobiles (12) comprend de plus une zone de mémoire (44) pour enregistrer lesdites tables descriptives reçues, des moyens d'affichage (26) desdites tables descriptives sur l'affichage (28), et des moyens de réception (34) depuis les commandes utilisateur pour sélectionner un ou plusieurs desdits services ou programmes multimédia sur l'affichage et pour permettre la réception du canal UMTS sélectionné.

5. Système pour transmettre des programmes multimédia selon l'une quelconque des revendications 1 à 4, **caractérisé en ce que** ledit récepteur (40) dans chacun desdits terminaux téléphoniques mobiles (12) est normalement désactivé et peut être activé par l'utilisateur à l'aide des moyens de commande (36, 38).

6. Système pour transmettre des programmes multimédia selon la revendication 5, **caractérisé en ce que** chacun desdits terminaux téléphoniques mobiles (12) est doté de moyens de signalisation visuels et/ou audio (28, 30), commandés par ledit émetteur-récepteur UMTS (22), afin de notifier l'utilisateur de l'arrivée d'un appel provenant du réseau cellulaire UMTS, pendant le fonctionnement dudit récepteur (40).

7. Système pour transmettre des programmes multimédia selon l'une quelconque des revendications 1 à 6, **caractérisé en ce que** l'architecture de protocole des signaux émis par ledit émetteur-récepteur radio comprend une macrocouche radio, qui est compatible avec le protocole UMTS, et une macrocouche supérieure.

8. Système pour transmettre des programmes multimédia selon la revendication 7, **caractérisé en ce que** ladite macrocouche supérieure comprend une couche 1P (protocole Internet), une couche UDP (protocole de datagramme utilisateur) et une couche d'application.

9. Système pour transmettre des programmes multimédia selon la revendication 8, **caractérisé en ce que** ladite couche d'application utilise un protocole RTP (protocole en temps réel) pour transporter les signaux au format MPEG-4.

10. Système pour transmettre des programmes multimédia selon la revendication 8, **caractérisé en ce que** ladite couche d'applicatïon utilise un protocole BTFTP (Broadcast Trivial File Transfer Protocol (version triviale du protocole FTP) pour transporter ces données textuelles.

11. Système pour transmettre des programmes multimédia selon la revendication 9, **caractérisé en ce que** lesdites données textuelles sont des tables descriptives décrivant les services ou programmes multimédia.

12. Terminal mobile pour l'utilisation dans le système selon l'une quelconque des revendications 1 à 11, comprenant un affichage graphique (28) pilote par des circuits de décodage (26) pour décoder des signaux audiovisuels, un émetteur-récepteur UMTS (22) prévu pour recevoir des signaux UMTS depuis une antenne (24), et un Contrôleur (32) qui connecte l'émetteur-récepteur UMTS (22) aux dits circuits de décodage (26), **caractérisé en ce que** le terminal comprend en outre un récepteur (40) de signaux qui sont compatibles avec la couche physique du protocole UMTS, qui peut être activé par l'utilisateur et syntonisé pour recevoir et démoduler le signal émis par ledit émetteur radio (14) et le transférer vers le contrôleur (32), et le contrôleur est prévu pour transférer aux dits circuits de décodage (26) au moins un des canaux dudit signal reçu.

13. Terminal mobile selon la revendication 12, **caractérisé en ce que** le contrôleur (32) est préréglé pour recevoir une sélection de canaux depuis un clavier (34) et pour sélectionner à partir du signal le canal sélectionné afin de l'acheminer vers les circuits de décodage (26).

14. Terminal mobile selon la revendication 12 ou 13, **caractérisé en ce qu'**il comprend en outre une mémoire (44) pour des tables décrivant les services ou les programmas multimédia, laquelle est connectée au contrôleur (32) et aux circuits de décodage (26), afin de recevoir les données textuelles contenues dans un canal préréglé et représenter un menu des programmes sur l'affichage (28) du terminal.
